# EUROPÄISCHE PATENTANMELDUNG

(11) **EP 0 590 242 A1**
(43) Veröffentlichungstag der Anmeldung: **06.04.1994**
(21) Anmeldenummer: 93109987.3
(22) Anmeldetag: 23.06.1993
(51) Int. Cl.: H04M 19/00, H04M 19/08

(54) **Schaltungsanordnung für die Speisung von digitalen Einrichtungen mit Induktorssimulatorschaltungen**

(30) Priorität: 02.10.1992 DE 4233682
(71) Anmelder: DeTeWe - Deutsche Telephonwerke Aktiengesellschaft & Co., D-10997 Berlin (DE)
(72) Erfinder: Neuhaus, Hans-Jürgen, D-12161 Berlin (DE)

(57) **Zusammenfassung**

Die Schaltungsanordnung für die Speisung von Endeinrichtungen in Kommunikationsnetzen, bei der die Speisequelle den Schnittstellen der Netzabschlußeinheiten und die Senken den Schnittstellen der Endeinrichtungen zugeordnet sind, verwendet statt herkömmlicher Übertrager für die Phantomspeisung elektronische Drosseln, wobei je Leitungsader Kondensatoren für die Signalein- und die Signalauskopplung der Informationsübertragung vorgesehen sind.

## Beschreibung

Die Erfindung betrifft eine Schaltungsanordnung für die Speisung von Endeinrichtungen, in Kommunikationsnetzen gemäß dem Obergegriff des Patentanspruches 1.

Beim digitalen Nachrichtennetz, z.B. dem diensteintegrierenden digitalen Nachrichtennetz (ISDN), sind zwischen der digitalen Vermittlung und dem Teilnehmeranschluß physikalische Schnittstellen vorgesehen. Diese Benutzer-Netz-Schnittstellen zwischen der digitalen Vermittlung und einem Teilnehmeranschluß (2-Draht-Schnittstelle) einerseits sowie einem Netzabschluß der digitalen Vermittlung und einem Teilnehmeranschluß (2- bzw. 4-Draht-Schnittstelle) andererseits, dienen auch der Energieübertragung an die Teilnehmeranschlüsse. Hierzu sind zwei Zusatzadern vorgesehen, oder die Speisung wird über die Adern übertragen, die auch der Informationsübertragung dienen. Im letzten Fall sind Phantomschaltungen für die Speisung vorhanden. ( P. Bocker : ISDN, Das diensteintegrierende digitale Nachrichtennetz, Springer-Verlag, 1986, S. 75 ).

Für die Phantomschaltungen werden Übertrager verwendet, die relativ unwirtschaftlich hinsichtlich des Raumbedarfes und des finanziellen Aufwandes gegenüber anderen elektrischen Bauelementen sind.

Der Erfindung lag daher die Aufgabe zugrunde, die bisherigen Schnittstellenübertrager für die Speisung der Teilnehmeranschlüsse durch eine elektronische Lösung zu ersetzen.

Diese Aufgabe ist durch die Erfindung gelöst, wie sie im Kennzeichnungsteil des ersten Patentanspruches dargelegt ist, Weitere vorteilhafte Ausgestaltungen sind Gegenstand der Unteransprüche.

Der Vorteil der Erfindung besteht in der wesentlichen Kostenersparnis bei entsprechender Schaltungsauslegung der elektronischen Drosseln und der Pegelanpassungen unter Verwendung von Standardbauelementen gegenüber den bisher eingesetzten Übertragern, sowie eines erheblich geringeren Raumbedarfes.

Die Erfindung ist für alle Schnittstellen mit Phantomspeisung verwendbar. Sie wird nachfolgend anhand von Schaltungsanordnungen näher beschrieben.

Es zeigt die
- Fig. 1: die herkömmliche Phantomschaltung einer Schnittstelle, die
- Fig. 2: eine Vierdrahtschnittstelle (S₀-Schnittstelle), die
- Fig. 3: eine Zweidrahtschnittstelle für kürzere Leitungslängen zwischen digitaler Vermittlung und Teilnehmeranschluß (U_{P0}-Schnittstelle) und die
- Fig. 4: eine Zweidrahtschnittstelle für längere Leitungen zwischen digitaler Vermittlung und Teilnehmeranschluß (U_{K0}-Schnittstelle).

In allen Figuren tragen gleiche Bauelemente dieselben Bezugszeichen.

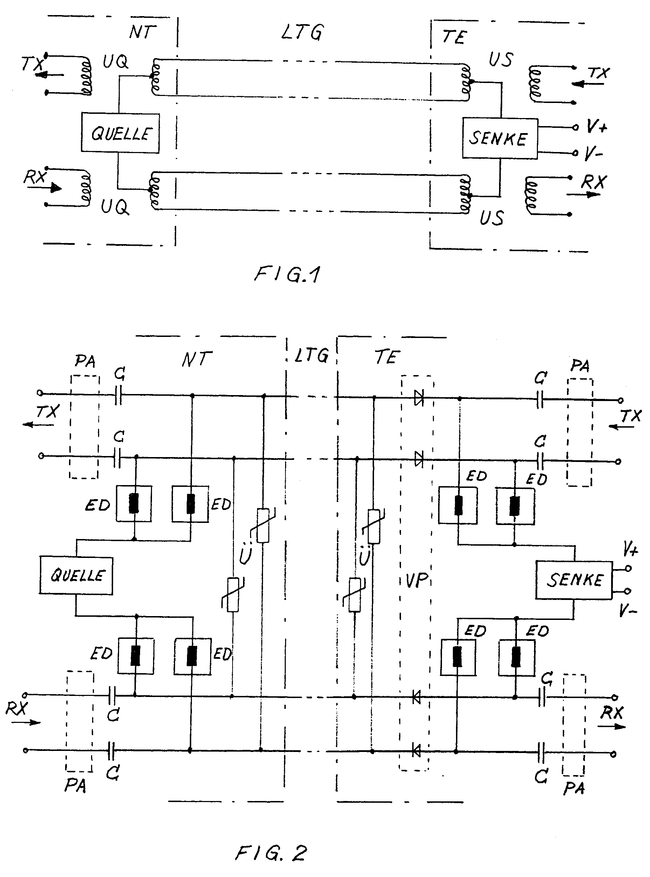

Die herkömmliche Phantomschaltung, wie sie in der Fig. 1 dargestellt ist, verwendet Übertrager UQ, über die Energie an der Quelle der Schnittstelle der Netzabschlußeinheit NT eingespeist wird. Die Energie wird an dem Übertrager US der Senke der Schnittstelle der Endeinrichtung TE abgegriffen und dem nicht dargestellten Teilnehmeranschluß als Speisung über die Punkte V+ und V- zur Verfügung gestellt. Gleichzeitig dienen die Leitungen LTG der Informationsübertragung, wobei im Vierdrahtbetrieb eine Senderichtung TX und eine Empfangsrichtung RX den Leitungen LTG zugeordnet wird.

Die Erfindung schlägt nun vor, die Übertrager UQ und US durch elektronische Drosseln zu ersetzen.

Bei einer Vierdrahtschnittstelle nach der Fig. 2 werden sowohl auf der Schnittstellenseite der Netzabschlußeinheit NT als auch auf der der Endeinrichtung TE jeweils elektronische Drosseln ED zwischen Quelle bzw. Senke und jeder Leitungsader geschaltet. Derartige elektronische Drosseln ED sind z.B. bekannt aus der DE 38 26 765 C2. Für die Signalein- und Signalauskoppelung während der Informationsübertragung sind je Leitungsader in den Schnittstellen der Netzabschlußeinheit NT und der Endeinrichtung TE Kondensatoren C vorgesehen.

Bei ISDN-Anlagen wird den Schnittstellen der Endeinrichtungen TE über die Polarität der Speisung mitgeteilt, ob der Normalbetrieb oder ein Notbetrieb vorliegt. In diesem Anwendungsfall sind die Schnittstellen der Endeinrichtungen mit einem Verpolungsschutz VP auszustatten. Weiterhin ist bei Anlagen, die beispielsweise über Freileitungen miteinander verbunden sind, ein Überspannungsschutz Ü an den Leitungsausgang der entsprechenden Schnittstellen der Netzabschlußeinheit NT und der Endeinrichtung TE als Blitzschutz vorzusehen.

Sollte das Übersetzungsverhältnis der durch die elektronischen Drosseln ED ersetzten Übertrager UQ,US (Fig. 1) ungleich eins sein, werden Pegelanpassungen PA je Leitungspaar an den Signalein- und den Signalauskopplungsstellen eingesetzt. Die Pegelanpassungen PA werden an die den elektronischen Drosseln ED abgewandten Seiten der Kondensatoren C geschaltet.

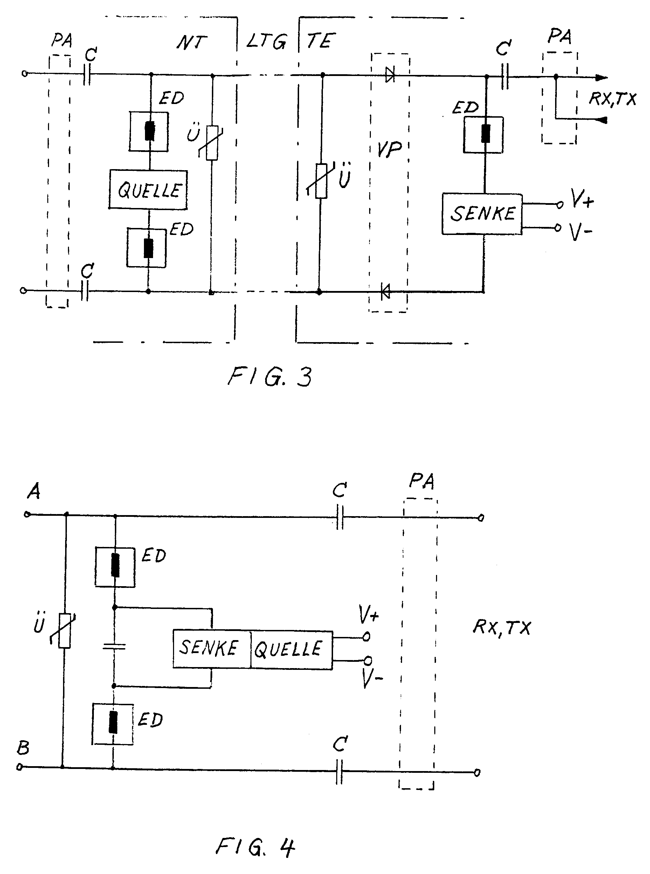

In der Fig. 3 ist die Speisung einer Zweidrahtschnittstelle für kürzere Leitungslängen gezeigt, die die gleichzeitige Übertragung von Informationen in beiden Richtungen gestattet, z.B. über das Zeitgetrenntlage- oder das Echokompensations-Verfahren. Die elektronischen Drosseln ED an der Quelle der Netzabschlußeinheit NT werden wie bei der Vierdrahtschnittstelle nach Fig. 2 zwischen Quelle und Leitungsadern geschaltet. Auf der Seite der Schnittstellen der Endeinrichtungen TE ist bei direktem Anschluß eines Endgerätes lediglich eine elektronische Drossel ED erforderlich. Dies ist dadurch möglich, weil die Endgeräte vom mechanischen Aufbau her verteilte Kapazitäten gegenüber Erdpotential oder Masse aufweisen, die ungefähr symmetrisch sind. Somit ist die Unsymmetrie an dieser Stelle vernachlässigbar.

Bei Zweidrahtschnittstellen für längere Anschlußleitungen zwischen der digitalen Vermittlungsstelle und einer digitalen Kommunikationsanlage, die auch als lokales Netzwerk bezeichnet wird, gemäß Fig. 4, werden zwei elektronische Drosseln ED eingesetzt, die jeweils an die Leitungsadern A,B zur Vermittlungsstelle geschaltet sind. Da die lokalen Netze über eine eigene Speisung ihres Bussystems verfügen, dient die Energieübertragung von der Vermittlungsstelle nur dem Notbetrieb. Somit stellt die Senke am Eingang zum lokalen Netzwerk gleichzeitig die Quelle für den Notbetrieb bei Ausfall der lokalen Speisung dar, um ein Endgerät betriebsbereit zu halten.

## Patentansprüche

1. Schaltungsanordnung für die Speisung von Endeinrichtungen in Kommunikationsnetzen, bei der die Speisequelle der Schnittstelle einer Netzabschlußeinheit der Vermittlungsstelle und die Senke der Schnittstelle der Endeinrichtung zugeordnet sind, dadurch gekennzeichnet,
daß zwischen Quelle der Schnittstelle der Netzabschlußeinheit (NT) und jeder Leitung sowie zwischen Leitungen und Senke der Schnittstelle der Endeinrichtung (TE) elektronische Drosseln (ED) geschaltet sind,
daß Kondensatoren (C) je Leitungsader in der Schnittstelle der Netzabschlußeinheit (NT) und der Endeinrichtung (TE) für die Signalein- und die Signalauskoppelung der Informationsübertragung vorhanden sind,
daß je Leitungspaar Pegelanpassungen (PA) und ein Überspannungsschutz (Ü) und auf der Seite der Schnittstelle der Endeinrichtung ein Verpolungsschutz (VP) vorgesehen sind.

2. Schaltungsanordnung nach Anspruch 1, dadurch gekennzeichnet,
daß bei Zweidrahtschnittstellen für kürzere Leitungslängen an der Schnittstelle der Endeinrichtung (TE) bei direktem Anschalten eines Endgerätes nur eine elektronische Drossel (ED) zwischen Senke und Leitung geschaltet ist.
